# EUROPEAN PATENT APPLICATION

(11) **EP 2 292 399 A1**
(43) Date of publication of application: **09.03.2011**
(21) Application number: 09169601.3
(22) Date of filing: 07.09.2009
(51) Int. Cl.: B29C 45/00, B29C 70/58, C08K 3/26, C08L 23/10

(54) **An injection moulding process for making parts using a polypropylene composition comprising calcium carbonate**

(71) Applicant: The Procter & Gamble Company, Cincinnati, OH 45202 (US)
(72) Inventor: Meadows, Grant, Hampton Hill, Middlesex TW12 1 JH (GB); Huesman, Joe, Maineville, Ohio 45039 (US); Miel Dalisay, Huberto, Cincinnati, Ohio 45242 (US)
(74) Representative: Marollé, Patrick Pierre Pascal

(57) **Abstract**

An injection moulding process for making parts, comprising the steps of: providing molten polypropylene composition comprising particulate CaCO₃ and additive; injecting said polypropylene composition into a mould to form said part; cooling said polypropylene composition to solidify it; ejecting said part from the mould; preparing the mould for moulding the next part; wherein the time of the cooling step is shortened by at least 1.5% compared to said process using a reference polypropylene composition substantially free of CaCO₃.

## Description

### FIELD OF THE INVENTION

The present invention relates to an injection moulding process for making injection moulded parts via the provision of a polypropylene composition comprising CaCO₃ and additives. This allows the time of the cooling step of the injection moulding process to be shortened compared to said process using a reference polypropylene composition substantially free of CaCO₃.

### BACKGROUND OF THE INVENTION

Thermoplastic materials are often used for producing all or parts of various household items as disclosed hereinafter. Typical thermoplastic material used for producing such items, for example containers and closures, include polyvinylchloride (PVC), polyethylene terephthalate (PET), polypropylene (PP), low or high density polyethylene (LDPE or HDPE) and polystyrene (PS).

Thermoplastic household items are required to have certain properties to allow them to perform their intended function. Indeed, such items need to have specific mechanical properties such as very good mechanical strength to withstand, for example, the rigours of transport, storage and use. For containers and closures, these rigours include e.g. stacking of items on top of each other (top-load), vibrations, shaking and other mechanical stresses, additionally temperature fluctuations during transportation, and usual handling stresses, such as being dropped and squeezed during consumer use. Thus, important mechanical properties include resistance to elongation, compression, flexion and temperature fluctuations. However, these containers and closures must have, at the same time, a weight as low as possible in order to keep material consumption and the resulting environmental footprint, as well as transportation effort, low. In addition, such containers are also required to provide a high level of aesthetic appeal to consumers.

Polypropylene is a polyolefin (or polyalkene) compound and is derived from crude oil. Environmental, economic and sustainability questions are restricting the use of products derived from this limited resource. Therefore, there is a desire to identify more sustainable and effective materials that can be used to replace - at least partially - the polyolefin component, whilst meeting the physical requirements discussed above.

The use of fillers to replace some of the thermoplastic material or even to change e properties of thermoplastic materials is known in the art. For example, carbon black is known to accelerate the degradation of polypropylene following exposure to UV light. Furthermore, various inorganic fillers have been used in combination with polyethylene - kaolin, mica, diatomite and talc, for example. These fillers tend to be economically affordable and widely available.

Injection moulding, described hereinafter, is a very commonly used process for manufacturing parts such as containers and closures but can equally be employed for making any of the other examples quoted above. In conventional injection moulding processes the rate-limiting step of the moulding cycle is the cooling step during which the moulded part solidifies sufficiently for further processing. Energy is stored as heat across the gauge of the part and must be transferred into the mould during the cooling cycle. Hence parts with a lower surface area to volume ratio cool more slowly, for example parts with a higher wall thickness. Cooling time has a significant impact on the speed and hence production capacity of injection moulding equipment, ultimately translating into a greater number of production stations.

There is a need, therefore, for the provision of an improved process for making injection-moulded parts, which maintains the suitable physical properties of the resultant moulded parts, such as mechanical strength and resistance to temperature. In addition, there is also a need for moulded parts with a low weight and good aesthetic properties. Furthermore, there is a need for the materials from which the part is made to be economically and ecologically sound and to demonstrate sustainability.

### SUMMARY OF THE INVENTION

The present invention relates to an injection moulding process for making parts, comprising the steps of:
(a) providing molten polypropylene composition comprising from 3% to 17% particulate CaCO₃ by total weight of the composition and from 0% to 6% additive, by total weight of the composition;
(b) injecting said polypropylene composition into a mould to form said part;
(c) cooling said polypropylene composition to solidify it;
(d) ejecting said part from the mould;
(e) preparing the mould for moulding the next part;
   wherein the time of step (c) is shortened by at least 1.5% compared to said process using a reference polypropylene composition substantially free of CaCO₃.

### BRIEF DESCRIPTION OF THE DRAWINGS

In one exemplary embodiment, the part is a bottle cap. An example of a bottle cap is depicted in figures 1 to 4 in an open configuration:
Figure 1 shows a perspective view.
Figure 2 shows the cap from above.
Figure 3 shows a front elevation of the cap.
Figure 4 depicts a cross-section across line X shown on figure 2.

### DETAILED DESCRIPTION OF THE INVENTION

As used herein, the terms: "substantially free of CaCO₃" means comprises less than 1%, preferably less than 0.5%, more preferably less than 0.1%, even more preferably 0%; "part" means a component portion of a final product.

All percentages are by weight unless otherwise stated.

The present invention relates to an injection moulding process for making parts, comprising the steps of:
(a) providing molten polypropylene composition comprising from 3% to 17% particulate CaCO₃ by total weight of the composition and from 0% to 6% additive, by total weight of the composition;
(b) injecting said polypropylene composition into a mould to form said part;
(c) cooling said polypropylene composition to solidify it;
(d) ejecting said part from the mould;
(e) preparing the mould for moulding the next part;
wherein the time of step (c) is shortened by at least 1.5% compared to said process using a reference polypropylene composition substantially free of CaCO₃.

The inventors have surprisingly found that utilising CaCO₃ in combination with polypropylene (also referred to as PP herein) results in a PP composition with markedly improved solidification time, due to a lower heat capacity and increased thermal conductivity of CaCO₃ compared to PP. Furthermore, said PP composition in its solid form exhibits improved mechanical properties, particularly an improved flexural modulus, compared to a reference PP composition substantially free of CaCO₃. The inventors have surprisingly found that the improved mechanical properties allow the wall thickness of the parts to be down-gauged. This enables desirable part weight reduction, whilst maintaining said mechanical properties above the thresholds necessary for the part to endure, with minimal damage, the required rigours, e.g. transportation and use. In combination, the cooling process step of an injection moulding cycle can be shortened by at least 1.5% compared to the same injection moulding process using a reference PP composition substantially free of CaCO₃. The result is an advantageously reduced mould cycle time. Furthermore, the PP composition exhibits a density such that it floats in water, which allows normal recycling methods to occur. Moreover, CaCO₃ has a whitening effect on parts and thus a lower amount of whitening agent such as TiO₂, is required. Also, PP comprising CaCO₃ wears injection moulding machinery more slowly than PP comprising TiO₂. Additionally, the PP composition meets economic and sustainability questions.

The process according to the present invention comprises the step of providing a specific PP composition. PP is a thermoplastic polymer made from 1-propene monomers, which are derived from crude oil, and has a melting point of ∼160°C. Suitable commercially available PPs include: grade PP 575-S from SABIC-KSA (Saudi Basic Industries Corporation, Kingdom of Saudi Arabia), Riyadh, Saudi Arabia; the homo-polymer European Moplen HP501L and the Moplen PP Random Copolymer RP340N, both from LyondellBasell Polymers, Houston, USA.

Said PP composition comprises particulate CaCO₃ (calcium carbonate). CaCO₃ is found naturally in various rocks and minerals, such as aragonite, calcite, vaterite, chalk, limestone, marble and travertine. The PP composition comprises from 5% to 14% CaCO₃, more preferably the PP composition comprises from 8% to 11% CaCO₃, by weight of the final composition. Said particulate CaCO₃ has a particle size of 2 to 4 µm. Particle size is commonly represented by the term d₅₀. A d₅₀ of 2 µm means 50% of the particles have a diameter of less than 2 µm. Using a particle size of above 4 µm is undesirable because larger particle sizes may result in the initiation of cracks in PP parts. A suitable commercially available CaCO₃ source as a filler for the present invention includes the granulated CaCO₃ product Omyalene® 102 M from Omya AG, Oftringen, Switzerland, which comprises 84% CaCO₃, 15% PP and ∼1% stearic acid.

Said PP composition also comprises at least one additive. Said PP composition comprises from 0% to 6% additive, more preferably from 0% to 3% additive, by weight of the final composition. Additives may be selected from the group consisting of: impact modifiers; dispersants; fillers; filler coatings; foaming agents; processing agents; lubricants; particles; dyes and colorants; UV filters; anti-static agents; and mixtures thereof. When particles are used as additives, said particles are different from particulate CaCO₃ as defined above. Additives used in the PP composition according to the present invention are conventional additives i.e. present in a conventional PP carrier mix. Particles may be used e.g. Expancel® microspheres from Akzo Nobel, Essen, Germany, and/or foaming agents e.g. Hydrocerol® from Clariant, Frankfurt-Höchst, Germany. Furthermore, different fillers may be utilised in addition to CaCO₃, for example kaolin, carbon black, mica, silica, diatomite, nano-particle clays, cellulose fibre, wood fibre, powdrous wood or china grass, rice spelt, starch and talc. With the addition of such additives the process may achieve further benefits such as increased displacement of PP resin, increased cycle time reduction, no yellowing side effects, and better part integrity.

According to the present invention the PP composition preferably exhibits a reduced specific heat capacity reduced compared to a reference PP composition substantially free of CaCO₃. The specific heat capacity of a material can be measured by modulated temperature differential scanning calorimetry, e.g. ASTM WK 12876. ATSM stands for American Society for Testing and Materials, which is now known as ATSM International.

Also preferably, the PP composition exhibits an increased thermal conductivity compared to reference PP composition substantially free of CaCO₃. Thermal conductivity can be measured by e.g. ASTM Standard D5930-01, a standard test method for thermal conductivity of plastics by means of a transient line-source technique.

Typical density, thermal conductivity and heat capacity values for PP and calcite (CaCO₃) are shown in Table I below.

**Table I**

| | **Polypropylene** | **Calcite** |
|---|---|---|
| **Density (g.cm⁻³)** | 0.92 | 2.7 |
| **Heat conductivity (W.m⁻¹K⁻¹)** | 0.1 - 0.22 | 1.5 - 4 |
| **Heat capacity (J.K⁻¹.kg⁻¹)** | 1700 - 1900 | 700 - 900 |

Also preferably, the PP composition in its solid form and with wall thickness T has a flexural modulus, measured according to ASTM D6272, has at least 95% of the flexural modulus measured on a reference composition substantially free of CaCO₃ and having wall thickness of at least T+10%. The flexural modulus can be measured using ASTM D790-07, which is a standard test method for flexural properties of unreinforced and reinforced plastics and electrical insulating materials by three-point bending. In an embodiment, the PP composition in its solid form has a compression stability, measured according to ASTM D2659, of at least 10% higher than compression stability of a reference composition substantially free of CaCO₃. The compression stability can be measured using ASTM D2659, which is a standard test method for column crush properties of blown thermoplastic containers.

PP items are commonly desired to be recycled. A typical method of recycling such items involves shredding and subsequent floatation sorting via density relative to water. PP floats in water whereas some other plastics sink. Preferably, the PP composition according to the present invention still exhibits a density such that it floats in water, which allows normal bottle sorting to occur i.e. it does not require different, and hence undesirable, recycling methods, compared to PP without CaCO₃.

The process according to the present invention further comprises the steps of (b) injecting said polypropylene composition into a mould to form said part; (c) cooling said polypropylene composition to solidify it; (d) ejecting said part from the mould; and (e) preparing the mould for moulding the next part. Injection moulding is a commonly used process for the manufacture of household items. Often blow moulding is used for containers and injection moulding is used for smaller and more complex parts such as bottle caps. Conventional injection moulding processes comprise the steps: injecting molten thermoplastic material (such as PP) into a mould to form the derived part; cooling said thermoplastic material (PP) long enough for it to solidify; opening the mould to allow access and ejection of the solidified part; closing the mould for the next cycle. More specifically, the process firstly involves injecting a molten thermoplastic composition into a cavity formed in a so-called mould, which consists of at least two pieces capable of being opened to release the solidified piece formed as a negative version of the cavity. A mould is also sometimes referred to as a die. After injection, the plastic is allowed to cool (usually actively cooled) and hence solidify. Then typically the mould is opened and the moulded part is ejected or removed from the mould. The mould then closes in preparation for the next cycle.

According to the present invention the time of the cooling step (c) is shortened by at least 1.5% compared to said process using a reference PP composition substantially free of CaCO₃. For the purposes of this application, the cooling time starts when the injection step (b) is complete and ends when the part has been ejected (step [d]). Preferably the time of the cooling step (c) is shortened by at least 10%, more preferably by at least 25%. Furthermore, the time of the cooling step (c) is shortened by at least 1 s, more preferably by at least 2 s, even more preferably by at least 3 s.

The process according to the present invention is suitable for making a wide variety of PP parts. Non-limiting examples of PP parts include: containers e.g. tubs, bottles, canisters, buckets; closures e.g. caps, actuators, lids, spouts; razors, razor packaging and razor accessories e.g. tray, handle, head, blade cassette, blade guard; make-up packaging e.g. lip sticks, powder compacts; shafts and/or handles for toothbrushes including electrical toothbrushes; kettles; food processors; juicers; electric shavers; hair driers; hair straighteners; curlers; laundry dosing balls and cups; tampon applicators; mops, brushes and other cleaning tools; water filters and components; containers for baby wipes; furniture components; hair dressing combs, clips and devices; applicators for colouring hair; laundry stain removing pens; etc.

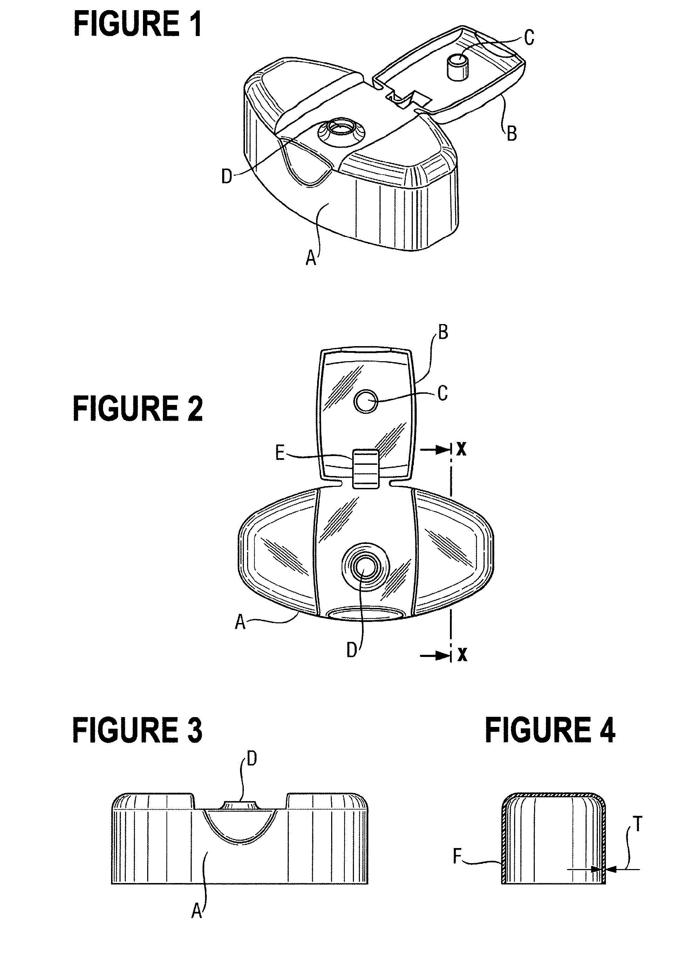

In a preferred embodiment, the part is a bottle cap or closure. Conventional bottle caps comprise a main body portion, an orifice and a closure, but vary in sizes and dimensions. Figures 1 to 4 show a typical flip top bottle cap, which is known from Procter & Gamble Company products e.g. Pantene®. As shown in figures 1 to 4, the flip top bottle cap, made from a PP composition according to the present invention, comprises a receiving portion (A); a hinged sealing portion (B); a sealing portion (C); a dispensing portion (D); and a hinge (E). The principles according to the present invention are applicable and readily transferrable to other parts such as those listed above.

When a flip top bottle cap - as shown in figures 1 to 4 - is made using the process and a PP composition according to the present invention, said bottle cap meets performance test requirements such that it is able to withstand the rigours of transportation and use, e.g. cap opening force, pull off force, leak resistance, hinge flex, impact resistance, stress crack resistance, fade resistance, and resistance to the product contained within the bottle.

In an embodiment, particularly when the part is a bottle cap, the PP composition is stable over a period of time of at least 6 months, preferably from 12 to 24 months, when exposed to a temperature from 25 to 45°C, a relative humidity from 20% to 60%, and exposure to light of 2700 Kelvin to 3300 Kelvin. Exposure to light is measured by the correlated colour temperature.

More preferably the bottle cap or closure is suitable for sealing a container comprising a household composition and for dispensing said household composition. Household compositions may be selected from the group consisting of: personal care compositions, cleansing compositions, fabric care compositions, and homecare compositions. Said household composition is preferably a personal care composition, more preferably a hair care composition. Hair care compositions may comprise any suitable hair care agents, preferably hair care agents selected from the group consisting of hair conditioning agents, hair styling agents, perming and waving agents, hair cleansing agents, hair colouring, dyeing agents, silicones, bleaching agents, hair shine or gloss imparting agents, and mixtures thereof.

The process according to the present invention is further suitable for making PP parts wherein the wall thickness T of said part has a value at least 10% lower than the wall thickness of a reference polypropylene part substantially free of CaCO₃. Wall thicknesses of parts can be measured with a calliper device. Figure 4 shows the wall thickness of a bottle cap, wherein the wall of the cap is shown as a cross-hatched portion (F), which has a wall thickness (T). The wall thickness T of the part has a value of at least 10% lower than the wall thickness of a reference polypropylene part substantially free of CaCO₃. More preferably the wall thickness T is reduced by at least 20%. When the part is a bottle cap, the average wall thickness is from 0.5 mm to 10 mm, more preferably 0.5 mm to 1.5 mm.

### Examples

The following examples further describe and demonstrate the preferred embodiments within the scope of the present invention. The examples are given solely for the purpose of illustration, and are not to be construed as limitations of the present invention since many variations thereof are possible without departing from its scope.

### Example 1

The correlation of amount of CaCO₃ filler in the PP composition with a reduction in the mould cycle time when in the context of the same mould for a bottle cap part is shown in the following table. The mould is for a 100 ml shampoo bottle cap, produced by Precision Dies & Tools Manufacturing Co., Dubai, United Arab Emirates. The PP used was from SABIC-KSA and was grade PP 575-S.

| **Amount of Omyalene^{®} 102 M (%)** | **Mould Cycle Time (s)** | **Time Reduction (%)** |
|---|---|---|
| 0 | 15.74 | 0 |
| 5 | 14.37 | 8.7 |
| 10 | 13.87 | 11.9 |
| 20 | 13.87 | 11.9 |
| 35 | 13.87 | 11.9 |

### Example 2

Using a Pantene 200 ml cap from Seaquist Closures Europe and the PP homo-polymer European Moplen HP501L from LyondellBasell Polymers, the mould cycle time was reduced by 3 s when the PP comprised 10% Omyalene^{®} 102 M i.e. 8.4% CaCO₃. The results and injection mould processing parameters utilised for this experiment can be found in the following table.

| **Injection Moulding Parameter** | **Value** |
|---|---|
| Injection Press (supplier) | Nestal |
| Screw Diameter (mm) | 70 |
| Clamping Force (kN) | 4200 |
| Screw RPM (revolutions per minute) | 310 |
| External Temperature (°C) | 22 |
| Melt Temp; Hopper Zone 1 (°C) | 220 |
| Melt Temp; Zones 2-3-4 (°C) | 230 |
| Melt Temp; Nozzle (°C) | 230 |
| Manifold Temperature (°C) | 230 |
| Hot Tips Temperature (°C) | 240 |
| Cycle Time On Screen (s) | 17.5 to 14.5^{‡} |
| Cooling Water Temperature (°C) | 13 |
| Cooling Time (s) | 9 to 6^{‡} |
| Hold Time (s) | 2.25 |
| Mould Opening Time (s) | 1.42 |
| Mould Closing Time (s) | 1.64 |
| Lid Closing Time (s) | 0 |
| Ejection Time (s) | 0.9 |
| Injection Delay (s) | 0 |
| Injection Rate (mm/s) | 100 |
| Peak Injection Pressure (bar) | 1835 |
| Fill Time (s) | 1.35 |
| Feed Stroke (mm), From: _to _ | 148 to 13 |
| Dosing Switchover Position (mm) | 122 |
| Decompression Position (mm) | 23 |
| Hold Pressure (bar) | 680 |
| Screw Back Pressure (bar) | 10 |
| Injection Pressure (bar) | 1800 |

| | |
|---|---|
| ^{‡}value obtained wherein the PP compositions comprised 10% Omyalene® 102 M. | |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An injection moulding process for making parts, comprising the steps of:
(a) providing molten polypropylene composition comprising from 3% to 17% particulate CaCO₃ and from 0% to 6% additive, by total weight of the composition;
(b) injecting said polypropylene composition into a mould to form said part;
(c) cooling said polypropylene composition to solidify it;
(d) ejecting said part from the mould;
(e) preparing the mould for moulding the next part;
wherein the time of step (c) is shortened by at least 1.5% compared to said process using a reference polypropylene composition substantially free of CaCO₃.

2. The process, according to claim 1, wherein the wall thickness T of the part has a value of at least 10% lower than the wall thickness of a reference polypropylene part substantially free of CaCO₃, more preferably reduced by at least 20%.

3. The process, according to any preceding claim, wherein said part is a bottle cap or closure suitable for sealing a container comprising a household composition and for dispensing said household composition.

4. The process, according to any preceding claim, wherein the bottle cap has an average wall thickness from 0.5 mm to 10 mm, more preferably 0.5 mm to 1.5 mm.

5. The process, according to any preceding claim, wherein the polypropylene composition comprises from 5% to 14% CaCO₃, more preferably 8% to 11% CaCO₃.

6. The process, according to any preceding claim, wherein the time of the cooling step (c) is shortened by at least 10%, more preferably by at least 25%.

7. The process, according to any preceding claim, wherein the polypropylene composition comprises from 0% to 3% additive.

8. The process, according to any preceding claim, wherein the additive is selected from the group of: impact modifiers; dispersants; fillers; filler coatings; foaming agents; processing agents; lubricants; particles; dyes and colorants; UV filters; anti-static agents; and mixtures thereof.
